# EUROPEAN PATENT APPLICATION

(11) **EP 4 651 307 A1**
(43) Date of publication of application: **19.11.2025**
(21) Application number: 24176140.2
(22) Date of filing: 15.05.2024
(51) Int. Cl.: H01R 4/34, B60R 16/02, H01R 4/64

(54) **GROUNDING OF AN ELECTRICAL DEVICE IN A VEHICLE**

(71) Applicant: Ford Global Technologies, LLC, Dearborn, MI 48126 (US)
(72) Inventor: GILBEY, Paul, Chelmsford, CM2 8UQ (GB); ROBINSON, Ben, London, SE10 9SF (GB); WARREN, Mike, Basildon, SS15 6GB (GB)
(74) Representative: Haley Guiliano International LLP

(57) **Abstract**

A subframe assembly comprising a subframe and a conductive element installed to the subframe thereby defining a surface interface at a fixing point between the subframe and the conductive element. The subframe and the conductive element are electrically isolated at the surface interface. A fastener is configured to secure the conductive element to the subframe at the fixing point, and to provide an electrically conductive pathway between the subframe and the conductive element through the fastener.

## Description

### Background

The present disclosure relates to systems and methods for grounding an electrical device of a vehicle. Particularly, but not exclusively, the present disclosure relates the grounding of electrical devices mounted on a vehicle subframe having a surface coating.

### Summary

It is common to provide means for grounding an electrical device of a vehicle. For example, one approach is to use a ground strap to ground the electrical device to the body of the vehicle, e.g., by spanning a distance between the electrical device and the body of the vehicle. Other approaches may use a bracket for a similar purpose. However, such straps and brackets may be large in size, e.g., when the electrical device is mounted on a subframe away from the body of the vehicle. As such, it is desirable to find an alternative manner of grounding the electrical device to the body of the vehicle.

Further, there is an increasing trend to use surface coatings on vehicle components, e.g., for anti-corrosion purposes, which may result in the surface of the components being non-conductive. In some cases, a serrated fastener may be used to cut into a coated surface of a component to aid with the grounding of an electrical device, e.g., at an attachment point of a grounding strap. However, the use of serrated fasteners may result in removal of the surface coating in a region surrounding the fastener.

Systems and methods are provided herein for grounding an electrical device, e.g., of an electric vehicle, to a support structure, e.g., a vehicle body. Such systems and methods may provide an improved means for grounding the electrical device, e.g., by eliminating the need for conventional grounding components. The systems and method disclosed herein may be used in any appropriate technology sector, e.g., in the automotive field and/or outside of the automotive field, e.g., on other machinery where electrical grounding is desired, such as a skid or generator. As such, the terms "vehicle subframe" and "vehicle body" used herein are by way of example and should be understood to be any analogous structures, where technically possible.

According to one aspect, a grounding assembly, e.g., for a vehicle, is provided. The grounding assembly comprises a vehicle body, an electrical device, a conductive element, and a subframe configured to support the electrical device relative to the vehicle body.

The grounding assembly comprises a first fixing point at which the electrical device is coupled to the subframe. The subframe is electrically isolated from the electrical device at the first fixing point, e.g., at a surface interface between the subframe and the electrical device at the first fixing point. For example, the subframe and the electrical device may be electrically isolated at the surface interface, e.g., by virtue of a non-conductive surface coating on the subframe and/or the electrical device.

The grounding assembly comprises a second fixing point at which the conductive element is coupled to the subframe. The subframe is electrically isolated from the conductive element at the second fixing point, e.g., at a surface interface between the subframe and the conductive element at the second fixing point. For example, the subframe and the conductive element may be electrically isolated at the surface interface, e.g., by virtue of a non-conductive surface coating on the subframe.

The grounding assembly comprises a third fixing point at which the subframe is coupled to the vehicle body. In some examples, the conductive element may be coupled to the subframe at the third fixing point. The subframe is electrically isolated from the vehicle body at the third fixing point, e.g., at a surface interface between the subframe and the vehicle body at the third fixing point. For example, the subframe and the vehicle body may be electrically isolated at the surface interface, e.g., by virtue of a non-conductive surface coating on the subframe and/or the vehicle body.

The grounding assembly comprises a first fastener configured to secure the electrical device to the subframe at the first fixing point. The first fastener is configured to provide an electrically conductive pathway between the electrical device and the subframe through the first fastener.

The grounding assembly comprises a second fastener configured to secure the conductive element to the subframe at the second fixing point. The second fastener is configured to provide an electrically conductive pathway between the subframe and the conductive element through the second fastener.

The grounding assembly comprises a third fastener configured to engage the conductive element. The third fastener is configured to secure the subframe to the vehicle body at the third fixing point. The third fastener is configured to provide an electrically conductive pathway between the conductive element and the vehicle body through the third fastener.

In some examples, a surface of the subframe, e.g., an exterior and/or interior surface of the subframe, comprises a non-conductive coating at the first fixing point, the second fixing point and/or the third fixing point.

In some examples, the first fastener provides the electrically conductive pathway between the electrical device and material beneath the non-conductive coating of the subframe at the first fixing point.

In some examples, the second fastener provides the electrically conductive pathway between the conductive element and material beneath the non-conductive coating at the second fixing point.

In some examples, an exterior surface of the vehicle body comprises a non-conductive coating at the third fixing point. The third fastener may provide the electrically conductive pathway between the conductive element and material beneath the non-conductive coating of the vehicle body at the third fixing point.

In some examples, the first fixing point comprises a first weld nut for receiving the first fastener. The second fixing point may comprise a second weld nut for receiving the second fastener. The vehicle body may comprise a third weld nut for receiving the third fastener.

In some examples, each of the first, second and third fasteners comprise a thread-forming bolt configured to form a thread in the first weld nut, the second weld nut and the third weld nut, respectively. For example, each of the first weld nut, the second weld nut and the third weld nut may be supplied as a threadless component, e.g., prior to assembly the grounding assembly.

In some examples, the conductive element and the subframe may comprise cooperating locating features configured to locate the conductive element and the subframe relative to each other.

In some examples, the conductive element comprises a Zn-Ni coating.

In some examples, the subframe comprises an electrostatic coating.

In some examples, at least a portion of subframe may be integral with the electrical device. For example, a portion of a battery casing, e.g., a PHEV battery or a BEV battery, may form at least part of the subframe. In such an example, the conductive element may be assembled to the battery casing before the battery is installed in the vehicle.

According to one aspect a vehicle is provided comprising the grounding assembly.

According to one aspect a subframe assembly is provided. The subframe assembly comprises a subframe and a conductive element installed to the subframe defining a surface interface at a fixing point between the subframe and the conductive element. The subframe and the conductive element are electrically isolated at the surface interface. The subframe assembly comprises a fastener configured to secure the conductive element to the subframe at the fixing point, and provide an electrically conductive pathway between the subframe and the conductive element through the fastener.

According to one aspect a method is provided for grounding an electrical device of a vehicle. The method comprises providing a subframe assembly. The subframe assembly comprises a subframe and a conductive element installed to the subframe defining a surface interface at a fixing point between the subframe and the conductive element. The subframe and the conductive element are electrically isolated at the surface interface. The subframe assembly comprises a fastener configured to secure the conductive element to the subframe at the fixing point, and provide an electrically conductive pathway between the subframe and the conductive element through the fastener. The method comprises installing the subframe assembly to a vehicle body using a fastener configured to i) engage the conductive element, ii) secure the subframe to a vehicle body, and iii) provide an electrically conductive pathway between the conductive element and the vehicle body through the fastener. The method comprises installing an electrical device to the subframe assembly using a fastener configured to secure the electrical device to the subframe, and to provide an electrically conductive pathway between the electrical device and the subframe through the first fastener.

According to one aspect a grounding assembly is provided for mounting an electrical device on a vehicle body. The grounding assembly comprises an electrical device; a vehicle body; a conductive element; a subframe configured to support the electrical device on the vehicle body, the subframe comprising: a first fixing point at which the electrical device is coupled to the subframe, wherein a first exterior surface of the subframe is electrically isolated from the electrical device at the first fixing point in an assembled configuration; a second fixing point at which the subframe is coupled to the vehicle body, wherein a second exterior surface of the subframe is electrically isolated from an exterior surface of the vehicle body at the second fixing point in an assembled configuration; and a third fixing point at which the conductive element is coupled to the subframe at the second exterior surface. The grounding assembly comprises a first fastener configured to secure the electrical device to the subframe at the first fixing point to define an electrically conductive pathway between material beneath the exterior surface of the electrical device and material beneath the first exterior surface of the subframe through a body of the first fastener; a second fastener configured to secure the conductive element to the subframe at the third fixing point to define an electrically conductive pathway between material beneath the second exterior surface of the subframe and the conductive element through a body of the second fastener; and a third fastener configured to secure the conductive element and the vehicle body to the subframe at the second fixing point to define an electrically conductive pathway between the conductive element and material beneath the exterior surface of the vehicle body through a body of the third fastener.

### Brief Description of the Drawings

The above and other objects and advantages of the disclosure will be apparent upon consideration of the following detailed description, taken in conjunction with the accompanying drawings, in which like reference characters refer to like parts throughout, and in which:
FIG. 1 illustrates a vehicle subframe for mounting an electrical device on a vehicle body, in accordance with some examples of the disclosure;
FIG. 2 shows a cross section through the vehicle subframe shown in FIG. 1, in accordance with some examples of the disclosure;
FIG. 3 shows an exploded view of a vehicle subframe and a grounding bracket, in accordance with some examples of the disclosure;
FIG. 4 shows a view of a vehicle subframe and a grounding bracket, in accordance with some examples of the disclosure;
FIG. 5 is a flowchart representing process for manufacturing and assembling a grounding assembly, in accordance with some examples of the disclosure;
FIG. 6 shows an exploded view of a vehicle subframe and a grounding bracket;
FIG. 7 illustrates a vehicle having a vehicle subframe for mounting an electrical device on a vehicle body.

### Detailed Description

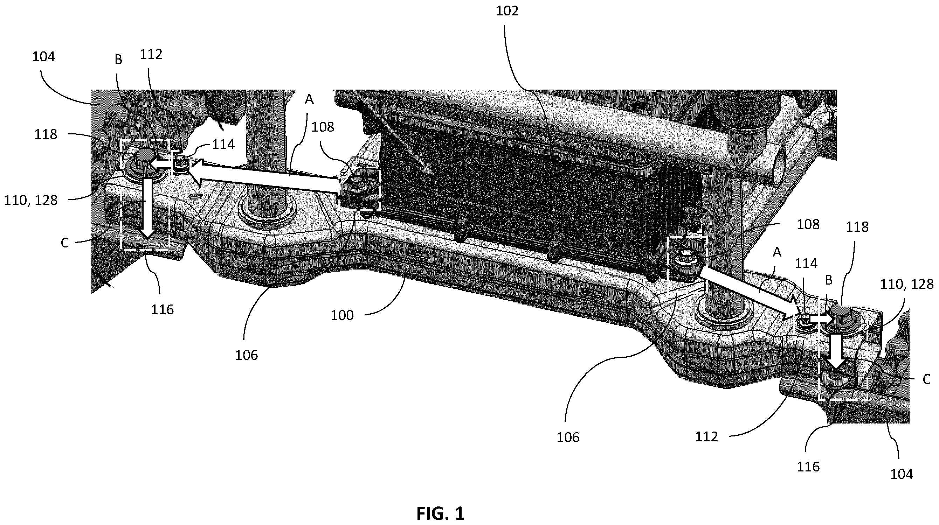

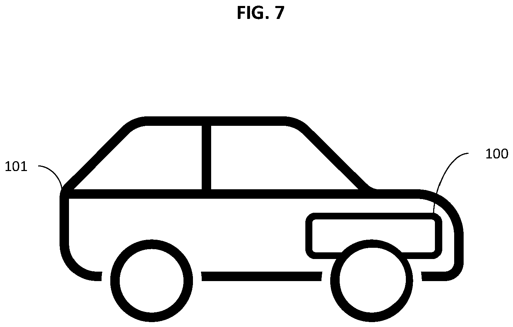

FIG. 1 illustrates a vehicle subframe 100 for mounting an electrical device 102 on a vehicle body 104 of a vehicle 101 (e.g., as shown in FIG. 7). In the context of the present disclosure, the term "vehicle" is understood to mean any type of vehicle, such as a car, a van, a truck, a motor bike, a marine vessel, an aircraft, etc. In the example shown in FIG. 1, the vehicle subframe 100 is a supporting structure configured to mount a high voltage (HV) module of an electric vehicle (EV) at a position relative to the vehicle body 104. The EV may be any appropriate type of EV, such as a battery electric vehicle (BEV), a hybrid electric vehicle (HEV), a plug-in hybrid electric vehicle (PHEV), a fuel cell electric vehicle (FCEV), etc. The HV module may be any type of HV component, e.g., a battery pack, a battery management system, an electric motor, an electric motor control unit, a power distribution unit, an AC-DC convertor, a DC-DC convertor, a compressor, or positive temperature coefficient heater. In some examples, the electrical device 102 may be an electrical ancillary component of the vehicle, such as lighting components, wiper and washer components, door lock components, infotainment components, heating, ventilation, and air conditioning (HVAC) components, electric window components, parking assistance components, power take-off (PTO) components or a combination thereof. The power take-off components may include peripheral devices but are not limited to a cherry picker, a crane lift, or a power tool utilizing vehicle power during power take-off operation. It will be understood that the above examples of the types of vehicles and electrical devices are not limited to such. In the below examples, any reference to "top" or "underside" (and the like) are not to be understood as absolute, and are merely used in respect of the orientations shown in the figures. As such, these terms should not be taken as limiting.

In the example shown in FIG. 1, the electrical device 102 is mounted on the subframe 100 and is secured to the subframe 100 at a first fixing point 106 (shown in dashed boxes) using a first fastener 108. A conductive element 110, e.g., a grounding bracket, is secured to the subframe 100 at a second fixing point 112 (shown in dashed boxes) using a second fastener 114. At a third fixing point 116 (shown in dashed boxes) the subframe 100 is mounted to the vehicle body 104. A third fastener 118 engages the conductive element 110, and secures the subframe 100 to the vehicle body 104. For the avoidance of doubt, the term "fixing point" as used in the context of the present disclosure is understood to mean a location, e.g., a general location, area or region, at which multiple components are secured together. For example, each fixing point may comprise one or more features, e.g., of different components (such as the subframe 100, conductive element 110, and/or fasteners, that cooperate to enable assembly of the electrical device 102 to the subframe 100, or the subframe 100 to the vehicle body 104, for example.

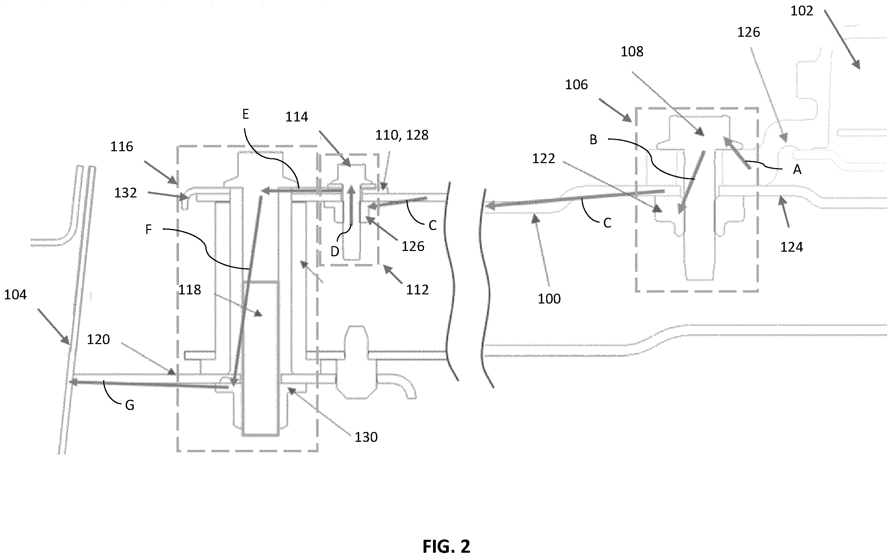

In the example shown in FIG. 1, the subframe comprises a surface coating, e.g., an electrostatic coating, that provides enhanced corrosion resistance to the subframe 100. The surface coating on the subframe 100 is a non-conductive surface coating that provides electrical isolation between the electrical device 102 and the subframe 100 at the first fixing point 106, between the conductive element 110 and the subframe 100, and between the subframe 100 and the vehicle body 104. For the avoidance of doubt, such electrical isolation is between respective surfaces of these components, e.g., where an exterior surface of one component (such as an underside of the electrical device 102) contacts an exterior surface of another component (such as a topside of the subframe 100). Such electrical isolation prevents an electrically conductive pathway between the electrical device 102 and the vehicle body 104, e.g., by virtue of the surface engagement between the components. However, an electrically conductive pathway (shown by arrows A, B and C) is provided upon installation of the fasteners 108, 114 and 118 at respective fixing points 106, 112 and 116. This pathway is shown in more detail in FIG. 2.

FIG. 2 shows a cross section through the vehicle subframe 100 shown in FIG. 1. In the example shown in FIG. 2, the subframe 100 is mounted on and secured to a support rail 120 of the vehicle body 104 at the third fixing point 116 using the third fastener 118, and the electrical device 102 is mounted on and secured to the subframe 100 at the first fixing point 106 using the first fastener 108. In particular, FIG. 2 shows engagement between the first fastener 108 and a first weld nut 122 of the subframe 100, which secures the electrical device 102 to the subframe 100. The weld nut 122 is welded to an underside 124 of a top portion of the subframe 100 before the surface coating is applied to the subframe 100. In this manner, an electrically conductive pathway exists between the material of the subframe 100 and the material of the weld nut 122. However, such a process results in the opening of the weld nut 122 also being surface coated.

In order to ensure that the electrically conductive pathway is completed between the first fastener 108 and the weld nut 122 at the first fixing point 106, the weld nut 122 is supplied threadless, and the first fastener 108 is supplied as a thread-forming bolt. In this manner, when the first fastener 108 engages the weld nut 122, a thread is cut into the weld nut 122, which breaks through the surface coating applied to the initially threadless inner surface of the opening in the weld nut 122.

In the example shown in FIG. 2, the electrical device 102 has a metallic outer housing, meaning that upon installation of the electrical device 102 to the subframe 100, and the tightening of the first fastener 108 into the weld nut 122, an underside of the head of the first fastener 108 engages a topside of the housing of the electrical device 102, thus defining the electrically conductive pathway between the housing of the electrical device 102 and the subframe 100. In the example shown in FIG. 2, this is indicated by arrows A-C.

At the second fixing point 112, the subframe 100 comprises a second weld nut 126 similar to the first weld nut 122, but of a different size. For example, the second weld nut 126 is supplied as a threadless nut and is welded to the underside 124 of the subframe 100 prior to the subframe 100 being surface coated. The second fastener 114 is supplied as a thread-forming bolt, which ensures that the surface coating is broken upon assembly of the second fastener 114 to the weld nut 126. In this manner, the electrically conductive pathway is extended from the subframe 100 into the second fastener 114, e.g., from arrow C to arrow D.

In the example shown in FIG. 2, the electrically conductive element 110 is supplied as a bracket having a Zn-Ni coating, which provides corrosion resistance to electrically conductive element 110 yet maintains electrical conductivity through the part. In the context of the present disclosure, this electrically conductive element 110 is referred to as a grounding bracket 128, since it enables the electrical grounding of the electrical device 102 when mounted on an electrically isolated surface, such as the surface-coated subframe 100.

At the second fixing point 112, when the second fastener 112 is tightened into the weld nut 126, an underside of the head of the second fastener 112 engages a topside of the grounding bracket 128, thus defining the electrically conductive pathway between the second fastener 112 and the grounding bracket 128. In the example shown in FIG. 2, this is indicated by arrows D-E.

At the third fixing point 116, the vehicle body 104 comprises a third weld nut 130 similar to the first weld nut 122, but of a different size. For example, the third weld nut 130 is supplied as a threadless nut and is welded to the underside support rail 120 of the vehicle body 104 prior to the vehicle body 104 being surface coated, e.g., painted. The third fastener 118 is supplied as a thread-forming bolt, which ensures that the surface coating on the third weld nut 130 is broken upon assembly of the third fastener 118 to the weld nut 130.

At the third fixing point 116, when the third fastener 118 is tightened into the weld nut 130, an underside of the head of the third fastener 118 engages the topside of the grounding bracket 128, thus defining the electrically conductive pathway between the grounding bracket 128 and the third fastener 118, and between the third fastener 118 and the third weld nut 130. In the example shown in FIG. 2, this is indicated by arrows E-G, thus completing the electrically conductive pathway between the electrical device 102 and the vehicle body, despite the electrical isolation between the surfaces of the components, as described above.

It will be appreciated that in other examples, completion of such an electrically conductive pathway may not rely on the use of weld nuts. For example, should the subframe 100 have a sufficient amount of material at the fixing points 106 and 112, a thread may be formed directly into the material of the subframe 100. Similar considerations apply to the third fixing point 116 in the vehicle body 104.

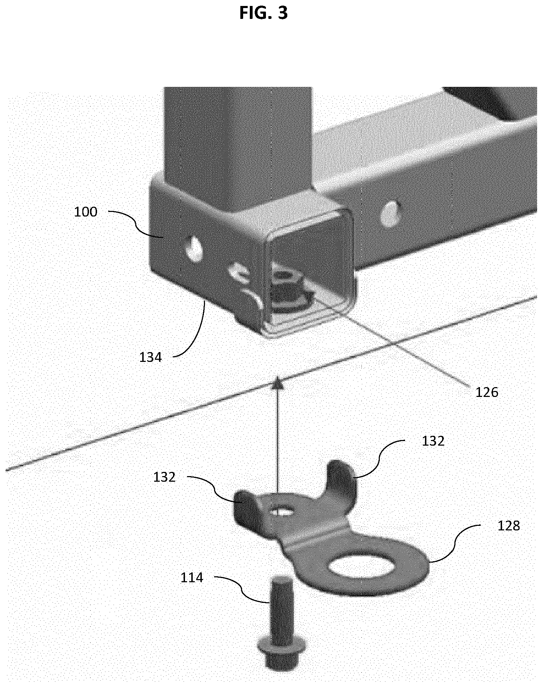

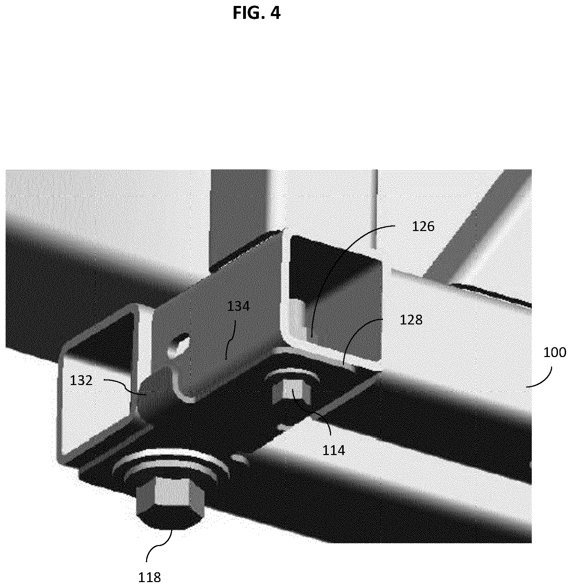

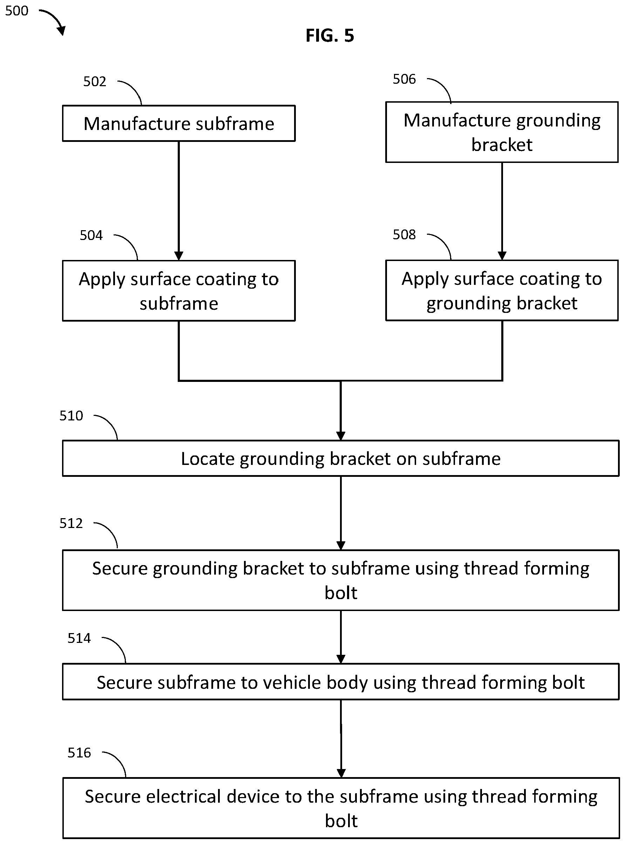

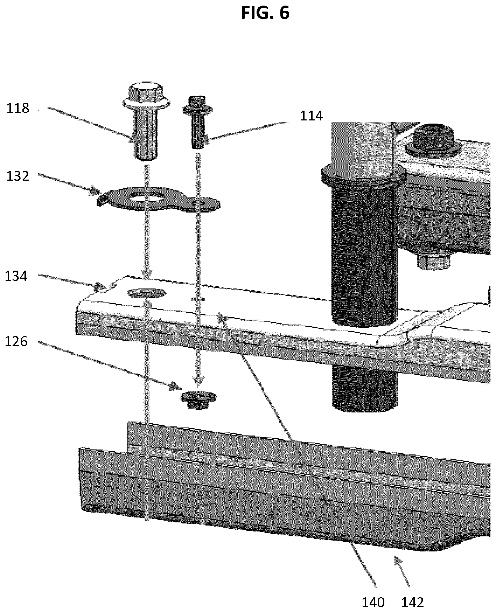

FIGS. 3 and 4 show variations on the configuration of the grounding bracket 128 shown in FIGS. 1, 2 and 6. For example, in FIGS. 1, 2 and 6, the grounding bracket 128 is roughly a "figure of eight" shape comprising respective openings for receiving the second and third fasteners 114, 118. A top surface of the grounding bracket 128 comprises sufficient land to engage the underside of the heads of the second and third fasteners 114, 118. In addition, the grounding bracket 128 comprises a retaining or locating feature 132 configured to engage a corresponding feature 134 of the subframe 100. Such a feature is useful during the assembly of the subframe 100, and is described below in more detail in relation to FIGS. 5 and 6.

In the example shown in FIG. 3, the grounding bracket 128 is roughly a "figure of eight" shape comprising respective openings for receiving the second and third fasteners 114, 118. However, the grounding bracket 128 is configured, e.g., pressed, bent or otherwise formed, such that a surface 136 of the grounding bracket 128 extends between two different planes, e.g., to allow the grounding bracket to be installed in an application where a surface of the subframe 100 changes in height between the second fixing point 122 and the third fixing point 116. In the example shown in FIG. 3, the grounding bracket 128 has multiple retaining or locating features 132 configured to engage an edge of the subframe 100. As such, edges 138 of the subframe 100 can be regarded as corresponding retaining or locating feature 134.

In the example shown in FIG. 4, the grounding bracket 128 is roughly rectangular, has a planar surface between the second fixing point 122 and the third fixing point 116, and multiple retaining or locating features 132, similar to the example shown in FIG. 3.

The example grounding brackets 128 shown in the enclosed FIGS. are not to be taken as limiting as to the shape of the bracket. Indeed, the grounding bracket may be any appropriate shape that provides electrical connection between the second fixing point 122 and the third fixing point 116.

FIG. 5 is a flowchart representing an illustrative process 500 for manufacturing subframe 100 and assembling the subframe 100 to a vehicle. FIG. 6 shows an exploded view of the subframe 100 at the second and third fixing points.

At 502, the subframe 100 is manufactured. In the example shown in FIG. 6, the subframe 100 is made up from at least a U-shaped top support portion 140 and a U-shaped bottom support portion 142. Prior to joining portion 140 and 142, the second weld nut 126 is welded to underside 124 of portion 140, which is then welded to portion 142 to form a cross member of the subframe 100 having a box cross section. Although not shown in FIG. 6, the first weld nut 122 may be welded in place concurrently with the welding of the second weld nut 126. After the welding operations are complete (and the crossmember is joined to any further portions of the subframe 100), a corrosion-resisting, non-conductive, surface coating is applied to the subframe 100, e.g., at 504 of process 500.

At 506, the grounding bracket 126 is manufactured, e.g., by a stamping or pressing process, and at 508 a corrosion-resisting, conductive, surface coating is applied to the grounding bracket 126.

At 510, the grounding bracket 126 is assembled to the subframe 100, e.g., by locating feature 132 in feature 134.

At 512, the second fastener 114, e.g., a thread-forming bolt, is received in the bore, e.g., a threadless bore, of the weld nut 126. Upon tightening of the second fastener 114 into the weld nut 126, an electrically conductive pathway is formed between the material of the subframe 100 and the grounding bracket 128. When tightening the second fastener 114, rotation of the grounding bracket 128 relative to the subframe 100 may be resisted by cooperation between locating features 132 and 134. In some examples, the subframe 100 and the grounding bracket 128 may be supplied as a subframe assembly, e.g., by a third party to a vehicle manufacturer for installation to a vehicle body 104. For example, such a subassembly may comprise multiple cross members joined to form a subframe 100, the subframe 100 having one or more grounding brackets 128 installed to the subframe 100, and one or more weld nuts configured to receive a thread-forming bolt for join the subframe 100 to a support structure and/or one or more components to the subframe 100.

At 514, the subframe 100 is secured to the vehicle body 104 (not shown in FIG. 6) using thread-forming bolt 118 and weld nut 126, thus forming an electrically conductive pathway between the grounding bracket 128 and the material to which the weld nut 126 is welded, e.g., the vehicle body 104.

At 516, the electrical device 102 is secured to the subframe 100 (not shown in FIG. 6) using thread-forming bolt 108 and weld nut 122, thus forming an electrically conductive pathway between the electrical device 102 and the material to which the weld nut 122 is welded, e.g., the subframe 100.

As a result of the above manufacturing and assembly processes, the need for conventional grounding straps or brackets is removed. Further, the corrosion-resisting properties of the surface coating are not compromised, e.g., through the use of bolts with serrated heads, when attaching conventional grounding straps or brackets.

The actions or descriptions of FIGS. 5 and 6 may be used with any other example of this disclosure. In addition, the actions and descriptions described in relation to FIGS. 5 and 6 may be done in any suitable alternative orders or in parallel to further the purposes of this disclosure.

The processes described above are intended to be illustrative and not limiting. One skilled in the art would appreciate that the steps of the processes discussed herein may be omitted, modified, combined, and/or rearranged, and any additional steps may be performed without departing from the scope of the invention. More generally, the above disclosure is meant to be illustrative and not limiting. Only the claims that follow are meant to set bounds as to what the present invention includes. Furthermore, it should be noted that the features and limitations described in any one example may be applied to any other example herein, and flowcharts or examples relating to one example may be combined with any other example in a suitable manner, done in different orders, or done in parallel. In addition, the systems and methods described herein may be performed in real time. It should also be noted that the systems and/or methods described above may be applied to, or used in accordance with, other systems and/or methods.

## Claims

1. A grounding assembly for a vehicle, the grounding assembly comprising:
a vehicle body;
an electrical device;
a conductive element;
a subframe configured to support the electrical device relative to the vehicle body;
a first fixing point at which the electrical device is coupled to the subframe, wherein the subframe is electrically isolated from the electrical device at the first fixing point;
a second fixing point at which the conductive element is coupled to the subframe, wherein the subframe is electrically isolated from the conductive element at the second fixing point; and
a third fixing point at which the subframe is coupled to the vehicle body, wherein the subframe is electrically isolated from the vehicle body at the third fixing point;
a first fastener configured to secure the electrical device to the subframe at the first fixing point, and to provide an electrically conductive pathway between the electrical device and the subframe through the first fastener;
a second fastener configured to secure the conductive element to the subframe at the second fixing point, and to provide an electrically conductive pathway between the subframe and the conductive element through the second fastener; and
a third fastener configured to engage the conductive element, to secure the subframe to the vehicle body at the third fixing point, and to provide an electrically conductive pathway between the conductive element and the vehicle body through the third fastener.

2. The grounding assembly of claim 1, wherein an exterior surface of the subframe comprises a non-conductive coating at each of the first fixing point, the second fixing point and the third fixing point.

3. The grounding assembly of claim 2, wherein the first fastener provides the electrically conductive pathway between the electrical device and material beneath the non-conductive coating of the subframe at the first fixing point.

4. The grounding assembly of claim 2 or 3, wherein the second fastener provides the electrically conductive pathway between the conductive element and material beneath the non-conductive coating at the second fixing point.

5. The grounding assembly of any of claims 2-4, wherein an exterior surface of the vehicle body comprises a non-conductive coating at the third fixing point, and wherein the third fastener provides the electrically conductive pathway between the conductive element and material beneath the non-conductive coating of the vehicle body at the third fixing point.

6. The grounding assembly of any of claims 2-5, wherein the first fixing point comprises a first weld nut for receiving the first fastener, the second fixing point comprises a second weld nut for receiving the second fastener, and the vehicle body comprises a third weld nut for receiving the third fastener.

7. The grounding assembly of claim 6, wherein each of the first, second and third fasteners comprise a thread-forming bolt configured to form a thread in the first weld nut, the second weld nut and the third weld nut, respectively.

8. The grounding assembly of any of claims 2-7, wherein the conductive element and the subframe comprise cooperating locating features configured to locate the conducive element and the subframe relative to each other.

9. The grounding assembly of any of claims 2-8, wherein the conductive element comprises a Zn-Ni coating.

10. The grounding assembly of any of claims 2-9, wherein the subframe comprises an electrostatic coating.

11. A vehicle comprising the grounding assembly of any of claims 2-10.

12. A subframe assembly comprising:
a subframe and a conductive element installed to the subframe defining a surface interface at a fixing point between the subframe and the conductive element, wherein the subframe and the conductive element are electrically isolated at the surface interface; and
a fastener configured to i) secure the conductive element to the subframe at the fixing point, and ii) provide an electrically conductive pathway between the subframe and the conductive element through the fastener.

13. A method of grounding an electrical device of a vehicle, the method comprising:
providing the subframe assembly according to claim 12;
installing the subframe assembly to a vehicle body using a fastener configured to i) engage the conductive element, ii) secure the subframe to a vehicle body, and iii) provide an electrically conductive pathway between the conductive element and the vehicle body through the fastener; and
installing an electrical device to the subframe assembly using a fastener configured to secure the electrical device to the subframe, and to provide an electrically conductive pathway between the electrical device and the subframe through the first fastener.
